# EUROPEAN PATENT SPECIFICATION

(11) **EP 4 158 310 B1**
(45) Date of publication and mention of the grant of the patent: **14.10.2026**
(21) Application number: 21730273.6
(22) Date of filing: 26.05.2021
(51) Int. Cl.: G01N 17/04

(54) **METHOD AND SPECIMEN**
VERFAHREN UND PROBE
PROCÉDÉ ET ÉCHANTILLON

(30) Priority: 27.05.2020 GB 202007878; 27.05.2020 EP 20275097
(43) Date of publication of application: 05.04.2023
(73) Proprietor: BAE SYSTEMS plc, London SW1Y 5AD (GB)
(72) Inventor: ELEY, Rebecka, Filton, Bristol BS34 7QW (GB); BALMOND, Mark, David, Filton, Bristol BS34 7QW (GB); FIGGURES, Christopher, Colin, Filton, Bristol BS34 7QW (GB); STURLAND, Ian Michael, Filton, Bristol BS34 7QW (GB); CHURCH, Simon Robert, Monmouthshire South Wales NP15 1XL (GB)
(74) Representative: BAE SYSTEMS plc Group IP Department
(86) International application number: PCT/GB2021/051277
(87) International publication number: WO 2021/240151

(56) References cited:
- EP-A2- 1 750 123
- WO-A1-2009/141639
- WO-A1-2011/042716
- US-A1- 2007 220 946
- US-A1- 2009 068 060
- LI DUANJIE ET AL: "CORROSION RESISTANCE OF COATING AFTER SCRATCH TESTING", TECHNICAL REPORT - FEBRUARY 2016, 21 April 2016 (2016-04-21), pages 1 - 10, XP093217328, Retrieved from the Internet <URL:https://www.researchgate.net/publication/301551425_CORROSION_RESISTANCE_OF_COATING_AFTER_SCRATCH_TESTING> DOI: 10.13140/RG.2.1.1566.7606
- ANONYMOUS: "Corrosion Testing of Automotive Coatings", PRODUCTS FINISHING, 7 January 2015 (2015-01-07), pages 1 - 4, XP055821419, Retrieved from the Internet <URL:https://www.pfonline.com/articles/scratching-the-surface-on-corrosion-testing-of-automotive-coatings> [retrieved on 20210706]

## Description

### FIELD

The present invention relates to evaluating corrosion protection of substrates due, at least in part, to coatings applied thereupon.

### BACKGROUND TO THE INVENTION

Corrosion of metals used in aircraft structures is an extensive and expensive problem for the aerospace industry, demanding an estimated annual cost in excess of $2 billion, including an estimated $1.7 billion for corrosion maintenance. Despite this large cost on corrosion maintenance, corrosion remains a common cause of damage to metal components and accounts for about 25% of all metal component failures on aircraft - only fatigue is responsible for more failures.

Test methods have been standardised for the evaluation of painted or coated metals. For example, ASTM D1654 - 08 (2016)e1 *Standard Test Method for Evaluation of Painted or Coated Specimens Subjected to Corrosive Environments* covers the treatment of previously painted or coated (generally, coated) specimens for accelerated and atmospheric exposure tests and their subsequent evaluation in respect of corrosion, blistering associated with corrosion, loss of adhesion at a scribe mark, or other film failure. Particularly, this standard test method provides a means of evaluating and comparing basic corrosion performance of a substrate, pretreatment, or coating system, or combination thereof, after exposure to corrosive environments. The specimens are scribed using a scribing tool to obtain uniform V-cuts through the coating that is being tested. The scribe must penetrate all organic coating layers on a metal specimen, leaving a uniformly bright line. The extent of scribe penetration through metal coatings, such as galvanise, should be agreed. A length of a scribed line should be sufficient to cover the length of a test area of a specimen. Generally, a single straight line is scribed on a specimen. The scribed specimens are then exposed, for example according to ASTM B117 - 19 Standard Practice for Operating Salt Spray (Fog) Apparatus. After exposure, for example for about 2,000 hours, the scribed specimens are evaluated for rust or corrosion creepage, in which the coating is removed along scribed lines and corrosion of the first substrate observed thereunder. That is, rust creepage or undercutting from the scribed lines under the coating is observed. Areas of the first substrate that are discoloured due to corrosion are rated by measuring maximum and minimum creepage from the scribed lines. The arithmetic mean of at least six measurements of the width of the corrosion zone is calculated and rust creepage c determined by: $c = \frac{{w}_{c} - w}{2}$ where
*w_{c}* is the mean overall width of the corrosion zone; and
w is the width of the original scribed line.

A rust creepage *c =* 0 mm corresponds with a rating number 10, a rust creepage 3.0 mm < *c* ≤ 5.0 mm corresponds with a rating number 5 and a rust creepage *c* ≥ 16.0 mm corresponds with a rating number 0, for example.

However, a problem with such test methods is that many coatings may pass such that it is very difficult to determine which coating provides the best level of corrosion protection.

Hence, there is a need to improve evaluating corrosion protection of substrates due, at least in part, to coatings applied thereupon.

WO 2011/042716 A1 describes a corrosion sensor for detecting the action of corrosive media includes a substrate, a conductive thin film formed on the substrate, and a layer of a 5 protective substance which partially overlays the conductive thin film. US 2007/220946 A1 describes methods and apparatuses are provided for creation of discrete corrosion defects with a wide range of diameter to depth aspect ratios for painted test standards. WO 2009/141639 A1 describes a corrosion sensor comprises an insulating substrate, a thin film of a first metallic material formed on the substrate; and an array of areas comprising a second metallic material provided at the surface of the thin film. EP 1 750 123 A2 describes a composite article comprising a plurality of layers, wherein at least one of the layers is a defective polymeric layer. US 2009/068060 A1 describes an apparatus for monitoring corrosion in a pressurized system such as a water-based fire protection system comprising a corrosion monitor mounted within a section of the system containing fluid, wherein the corrosion monitor comprises a surface comprising at least one point of weakness wherein corrosion of a point of weakness causes a change in pressure in an interior chamber of the monitor, which change can be to provide a signal alerting monitoring personnel.

Li Duanjie ET AL: "CORROSION RESISTANCE OF COATING AFTER SCRATCH TESTING",Technical Report - 21 April 2016 (2016-04-21), pages 1-10, XP093217328,DOI: 10.13140/RG.2.1.1566.7606 discloses the Nanovea Mechanical Tester Macro Scratch Module to generate scratches at different constant normal forces on a coated steel sheet, then immerses the scratched sample in hydrochloric acid for 3 hours and employs a Nanovea Non-Contact Optical Profilometer to quantify scratch track volume change as a measure of corrosion resistance.

### SUMMARY OF THE INVENTION

It is one aim of the present invention, amongst others, to provide a method in accordance with independent claim 1 of evaluating corrosion protection of substrates due, at least in part, to coatings applied thereupon which at least partially obviates or mitigates at least some of the disadvantages of the prior art, whether identified herein or elsewhere. For instance, it is an aim of embodiments of the invention to provide a method that better distinguishes between the corrosion protection due to different coatings. For instance, it is an aim of embodiments of the invention to provide a specimen in accordance with independent claim 15 that allows a more quantitative evaluation of corrosion protection.

### DETAILED DESCRIPTION OF THE INVENTION

According to the present invention there is provided a method, as set forth in the appended claims. Also provided is a specimen. Other features of the invention will be apparent from the dependent claims, and the description that follows.

### Method

The first aspect provides a method of evaluating corrosion protection of substrates due, at least in part, to coatings applied thereupon, wherein the method does not comprise and is not a resistive method of determining corrosion protection, wherein the method comprises:
preparing a first specimen comprising:
applying a first coating, comprising a first set of layers including a first layer, on a first substrate; and
providing a first set of perforations, including a first perforation and a second perforation, in the first coating, wherein the first perforation is a first channel in the first coating and has a first depth through
the first coating and a first dimension transverse to the first depth wherein the first channel has a planar base, wherein the second perforation is a second channel in the first coating has a second depth through the first coating and a second dimension transverse to the second depth wherein the second channel has a planar base, wherein the first dimension and the second dimension are different,
wherein the first dimension is a width of the first channel and wherein the second dimension is a width of the second channel;
exposing the first specimen to a first corrosive environment; and determining corrosion in the first set of perforations wherein determining pitting corrosion of the first substrate in the first set of perforations comprises monitoring a time to formation of a corrosion pit having a threshold size δₘᵢₙ in the first set of perforations.

That is, the first and second perforations of the first set of perforations, having different first and second dimensions (for example, widths or diameters) respectively, are provided in the first coating of the first specimen. The first specimen is then exposed to the first corrosive environment and corrosion is determined, for example after the exposing, in the first and second perforations. It should be understood that corrosion is determined in the first and second perforations, rather than, for example, underlying the first coating adjacent thereto c.f. evaluation of rust creepage according to ASTM B117 - 19. That is, corrosion of the first substrate, particularly pitting corrosion of the first substrate, within the first and second perforations is determined. In this way, by determining corrosion in the first set of perforations, evaluation of corrosion protection of substrates due, at least in part, to different coatings may be improved, allowing qualitative and/or quantitative assessment of corrosion protection due, at least in part, to the coatings.

In this way, the method provides endpoint detection during the evaluation in order to allow quantitation assessment of the corrosion protection performance of the coatings.

### Method

The method is of evaluating corrosion protection of substrates due, at least in part, to coatings applied thereupon.

It should be understood that the method of evaluating corrosion protection does not comprise and is not a resistive method of determining corrosion protection, typically used for in situ measurements. Similarly, the specimen according to the second aspect does not comprise and is not a resistive corrosion sensor.

For example, a known resistive corrosion sensor comprises a patterned conductive thin film provided on a substrate, in which the thin film is of a material, typically a metal, having corrosion characteristics representative of that of a metal of a structure on which the corrosion sensor is mounted. The corrosion sensor defines a set of sensing elements, for example linear or serpentine sensing elements, extending between common terminals, wherein the respective sensing elements are thus in parallel. A coating, for example paint optionally including a corrosion inhibitor, is provided over the substrate and the sensing elements. The initial overall resistance of the corrosion sensor (i.e. before the action of corrosive media) is determined, at least in part, by the resistivity of the conductive thin film and the respective lengths and cross-sectional areas of the sensing elements. The resistivity is predetermined by the selection of material for the conductive thin film, which is selected according to the metal of the structure on which the corrosion sensor is mounted. Generally, the action of corrosive media on the sensing elements increases the overall resistance thereof, as measured between the common terminals. The measured increase in overall resistance may be related to the effects of corrosion of the metal of the structure on which the corrosion sensor is mounted. However, the measured increase in overall resistance is non-specific and is related to the effects of corrosion of the metal of the structure on which the corrosion sensor, may be due to atmospheric corrosion, erosion corrosion, selective corrosion, uniform corrosion, pitting corrosion, fretting corrosion, stress corrosion, inter-granular corrosion and/or corrosion fatigue. In contrast, the method according to the first aspect and the specimen according to the second aspect relate specifically to pitting corrosion.

### Substrates

The method is applicable to ferrous and non-ferrous substrates.

### Coatings

### Preparing specimens

The method comprises preparing the first specimen. Generally, specimens are also known as test specimens, coupons or test coupons, panels or test panels, samples or test samples. In one example, the first specimen is of a set of specimens including N specimens, where N is a natural number greater than or equal to 1, for example 1, 2, 3, 4, 5, 6, 7, 8, 9, 10 or more. Particularly, a plurality of specimens may be prepared, substantially similar or identical to the first specimen, wherein each specimen is exposed for a different duration to the first corrosive environment. In this way, the corrosion protection of the first substrate due, at least in part, to the first coating applied thereupon may be evaluated as a function of time. Additionally and/or alternatively, a plurality of specimens may be prepared, substantially similar or identical to the first specimen but having different coatings applied thereupon, wherein each specimen is exposed for the same duration to the first corrosive environment. In this way, the corrosion protection of the first substrate due, at least in part, to different coatings applied thereupon may be evaluated. Additionally and/or alternatively, a plurality of specimens may be prepared, substantially similar or identical to the first specimen, where in each specimen is exposed for the same duration to a different corrosive environment. In this way, the corrosion protection of the first substrate due, at least in part to the first coating applied thereupon may be evaluated for different corrosive environments.

### First substrate

In one example, the first substrate comprises and/or is a metal or an alloy, for example a ferrous, such as a low alloy steel or a stainless steel, or a non-ferrous alloy, such as an aluminium alloy, a cobalt alloy, a nickel alloy or a titanium alloy.

In one example, the first substrate comprises and/or is an aluminium alloy, for example a 1000 series, a 2000 series, a 3000 series, a 4000 series, a 5000 series, a 6000 series, a 7000 series, a 8000 series aluminium alloy, preferably a 2000 series, a 5000 series, a 6000 series or a 7000 series aluminium alloy, more preferably a 2000 series or a 7000 series aluminium alloy, having any applicable temper designation (i.e. -F, -H, -H1, -H2, -H3, -HX2, -HX4, -HX6, -HX8, -HX9, -O, - T, -T1, -T2, -T3, -T4, -T5, -T51, -T510, -T511, -T52, -T6, -T7, -T8, -T9, -T10, -W).

In one example, the aluminium alloy is an aerospace aluminium alloy selected from: 1420, 2004, 2014, 2017, 2020, 2024, 2080, 2090, 2091, 2095, 2124, 2219, 2224, 2324, 2519, 2524, 4047, 6013, 6061, 6063, 6113, 6951, 7010, 7049, 7050, 7055, 7068, 7075, 7079, 7093, 7150, 7178, 7475 and 8009.

In one example, the aluminium alloy is a marine aluminium alloy selected from: 5052, 5059, 5083, 5086, 6061 and 6063.

### First coating

The first coating comprises the first set of layers including a first layer. It should be understood that the purpose of the first coating is to provide corrosion protection for the first substrate. Suitable coatings for different substrates are known. A brief overview is provided of coatings for aluminium alloys.

Corrosion protection of aluminium alloys is typically a multistep treatment process including pre-treatment processes, such as anodising, followed by application of conversion coatings and/or organic coatings (barrier and inhibitor combinations), to give a multi-layered coating. For example, a typical multistep treatment process comprises:
1. selective deoxidation, for intermetallic (IM) particle removal and surface etching, to improve adherence of coatings to the surface and may provide some corrosion protection;
2. deposition or growth of a manufactured oxide via electrochemical (anodising) or chemical (conversion coating) means; and
3. use of an organic coating for specific applications, normally including, but not limited to, a primer and a top-coat.

Anodised coating processes for aluminium alloys typically produce an outer oxide having a cellular structure on top of a thin barrier layer that provides some protection against corrosion. Inhibitors maybe included in the outer porous layer of the anodized layer during formation or as a seal after formation to offer some extra protection upon damage. Processes for electrochemical growth of surface protective oxides include chromic acid anodizing while more environmentally-friendly alternatives such as sulfuric, sulfuric-boric, sulphuric-tataric and phosphoric based processes maybe preferred.

Conversion coatings are an alternative to anodizing, in which a coating is chemically precipitated on the surface. For high strength aluminium alloys, such as 2000 and 7000 series aluminium alloys, chromate conversion coating (CrCC or CCC) is the preferred process. Replacements for the toxic chromate-based conversion coatings include a range of treatments based on self-assembled monolayers, sol-gel chemistries, Ti/Zr oxyfluorides, rare earth, cobalt, vanadates, molybdates and permanganate processes.

After anodising or conversion coating, an organic coating is typically applied. Many organic coatings are known and described herein are organic coatings suitable for high strength aluminium alloys, such as 2000 and 7000 series aluminium alloys. The organic coating usually includes a primer, a topcoat and optionally, one or more intermediate coats. The primer layer is the main corrosion protective layer and includes corrosion inhibitors that are released when corrosive species or water reach the aluminium alloy. In order to provide corrosion protection to the aluminium alloy, the inhibitor should be provided during a corrosion event at a concentration higher than the minimum concentration at which the inhibitor stops corrosion (critical concentration). This is important because the critical concentration of the inhibitor in the primer must be maintained during the service life of structures structures such as airframes, where maintenance may not be practicable due to inaccessibility. Chromate inhibitors provide continuous protection and repair to the surface of the aluminium alloy while the chromate remains above the critical concentration. This mechanism of inhibitor release and metal protection may be termed a self-healing mechanism, since the release of the active species recovers the protective layer on top of the metal. Other inhibitors are known. The topcoat and optional intermediate coats provide physical barriers; the topcoat may provide an impervious layer.

In one example, the first layer comprises a first inhibitor, as described above. That is, the first layer may be a primer, for example.

Example primers include PPG PR205 and PPG PR143. Other primers are known.

In one example, the first set of layers includes a zeroth layer, for example underlying the first layer, such as an anodising or conversion layer, for example a chromic acid anodising layer or an Alocrom or Alodine conversion coating.

In one example, the first set of layers includes a second layer, for example overlaying the first layer such as an intermediate coat or a topcoat.

Example topcoats include PPG EC75 and PPG CA8311. Other topcoats are known.

In one example, the first set of layers includes a zeroth layer, such as an anodising or conversion layer, for example a chromic acid anodising layer or an Alocrom conversion coating, the first layer, such as a primer, and a second layer, such as an intermediate coat or a topcoat.

### Applying coating

Preparing the first specimen comprises applying the first coating, comprising the first set of layers including a first layer, on the first substrate. It should be understood that the first coating is applied to a surface, for example an outer surface, of the first substrate.

Methods of applying the first coating on the first substrate are known.

In one example, applying the first coating comprises applying the first layer directly on the first substrate, for example without any interlayers therebetween.

In one example, the first set of layers includes a zeroth layer, such as an anodising or conversion layer, for example a chromic acid anodising layer or an Alocrom conversion coating, and wherein applying the first coating comprises applying the zeroth layer on the first substrate, for example directly on the first substrate, and applying the first layer on the zeroth layer, for example directly on the zeroth layer, wherein the zeroth layer underlays the first layer.

In one example, the first set of layers includes a second layer, such as an intermediate coat or a topcoat, and wherein applying the first coating comprises applying the second layer on the first layer, for example directly on the first layer, wherein the second layer overlays the first layer.

In one example, the first set of layers includes a zeroth layer, such as an anodising or conversion layer, for example a chromic acid anodising layer or a Alocrom conversion coating, the first layer, such as a primer, and a second layer, such as an intermediate coat or a topcoat, wherein applying the first coating comprises applying the zeroth layer on the first substrate, for example directly on the first substrate, applying the first layer on the zeroth layer, for example directly on the zeroth layer, wherein the zeroth layer underlays the first layer, and applying the second layer on the first layer, for example directly on the first layer, wherein the second layer overlays the first layer.

In one example, applying the first coating comprises curing the first coating.

In one example, preparing the first specimen comprises providing a flat surface on the first substrate, for example by machining such as milling or grinding, and wherein applying the first coating on the first substrate comprises applying the first coating on the flat surface provided on the first substrate. In this way, the set of perforations may reveal the flat surface.

### Providing set of perforations

Preparing the first specimen comprising providing the first set of perforations, including the first perforation and the second perforation, in the first coating. That is, the first set of perforations is provided in (i.e. through such as partly or fully through) the first coating. It should be understood that the first set of perforations is generally similar, for example the first perforation and the second perforation are generally similar, such as with respect to shape but have different dimensions transverse to their respective depths. That is, a plurality of perforations is provided in the first specimen. In this way, the plurality of perforations is exposed to the same first corrosive environment, for example simultaneously. In this way, evaluation of corrosion protection is improved because multiple tests are thus performed simultaneously, yielding more data points.

In one example, providing the first set of perforations comprises machining, at least in part, the first perforation in the first coating after applying the first coating on the first substrate. That is, the first set of perforations is machined in the applied first coating. In one example, machining, at least in part the first perforation in the first coating comprises scribing, milling, turning and/or cutting the first coating, for example using a tool. Suitable tools are known. Machining may be suitable for relatively smaller perforations.

In one example, providing the first set of perforations comprises, at least in part, masking the first substrate using a first mask before applying the first coating on the first substrate and removing the first mask thereafter. That is, the first set of perforations is defined by the first mask. Masking may be suitable for relatively larger perforations.

The first perforation has the first depth through the first coating and the first dimension transverse, for example orthogonal, to the first depth. It should be understood that the first dimension is a lateral dimension of the first perforation, for example a width or a diameter c.f. a length. In one example, the first perforation extends through the first layer of the first set of layers of the first coating, for example fully through the first layer, whereby the first depth corresponds with (i.e. is equal to) a thickness of the first layer. In one example, the first perforation extends through the first set of layers of the first coating, for example fully through the first set of layers of the first coating, thereby revealing the first substrate (i.e. uncovering the first substrate), whereby the first depth corresponds with a thickness of the first coating. In one example, the first set of layers includes a zeroth layer, such as an anodising or conversion layer, and the first perforation extends through the first layer, thereby revealing the zeroth layer, whereby the first depth corresponds with a thickness of the remaining layers. That is, the first depth may be defined as that depth through the first coating required to reveal a desired layer, such as the zeroth layer, or the first substrate.

The second perforation has the second depth through the first coating and the second dimension transverse to the second depth. The second perforation may be generally as described with respect to the first perforation. In one preferred example, the second depth corresponds with the first depth i.e. the second depth is equal to the first depth.

The first dimension and the second dimension are different. By having different first and second dimensions, corrosion protection of the first substrate due, at least in part, to the first coating may be evaluated as a function of distance from the first coating. For example, if the second dimension is greater than the first dimension, corrosion protection of the first substrate due, at least in part, to the first coating may be relatively greater at a first position (e.g. a midpoint) relatively more proximal the first coating in the first perforation compared with a second position (e.g. a midpoint) relatively more distal the first coating in the second perforation.

In one example, the first set of perforations includes P perforations, where P is a natural number greater than or equal to 2, for example 2, 3, 4, 5, 6, 7, 8, 9, 10 or more. Each perforation of the first set of perforations may be as described with respect to the first perforation but having different dimensions transverse to their respective depths.

In one example, providing the first set of perforations comprises revealing, at least in part, the first substrate. That is, the first substrate is directly exposed to the corrosive environment. Since the set of perforations is provided in the first coating, edges of the first set of layers of the first coating are also similarly revealed.

In one example, the first set of layers includes a zeroth layer and wherein providing the first set of perforations comprises revealing, at least in part, the zeroth layer. That is, the zeroth layer is directly exposed to the corrosive environment.

Providing the first set of perforations comprises providing the first perforation as a first channel in the first coating, wherein the first dimension is a width of the first channel. That is, channels (i.e. slots or troughs or grooves or lines) are provided in the first coating. It should be understood that the width of the first channel is measured at a base thereof. In one example, the first channel has a constant first dimension along a length thereof. In one example, the first channel is a linear channel (i.e. a straight line). In one example, the first channel has a planar base (i.e. a flat bottom) c.f. a scribed V groove. In this way, quantitative evaluation of corrosion protection is improved. In one example, a cross-sectional shape of the first channel is a quadrilateral, preferably a regular quadrilateral, such as a square, a rectangle or an isosceles trapezium. If the cross-sectional shape of the first channel is an isosceles trapezium, walls of the first channel taper outwards away from the base. In one example, the first channel has a cuboidal or a trapezoidal shape. In one example, a length of the first channel is significantly greater than the width of the first channel, for example wherein the length is at least a factor 5, preferably at least a factor 10, more preferably at least a factor 25, most preferably at least a factor 50 greater than the width of the first channel. In one example, a length of the first channel corresponds with (i.e. equal to) a length of the second channel. In one example, the lengths of each channel are the same.

In one example, providing the first set of perforations comprises providing the first perforation as a first bore in the first coating, wherein the first dimension is a diameter of the first bore. That is, bores (i.e. wells) are provided in the first coating. It should be understood that the diameter of the first bore is measured at a base thereof. In one example, the first bore has a planar base (i.e. a flat bottom). In one example, a cross-sectional shape of the first bore is a quadrilateral, preferably a regular quadrilateral, such as a square, a rectangle or an isosceles trapezium. If the cross-sectional shape of the first bore is an isosceles trapezium, walls of the first bore taper outwards away from the base. In one example, the first bore has a cylindrical or a frustoconical shape.

In one example, the first dimension is in a range from 0.1 mm to 25 mm, preferably in a range from 0.2 mm to 10 mm, more preferably in a range from 0.5 mm to 5.0 mm, for example 0.6 mm, 0.8 mm, 1.0 mm, 2.0 mm, 3.0 mm or 4.0 mm. In this way, evaluation of the corrosion protection may be accelerated because corrosion in relatively large perforations is monitored.

In one example, the respective dimensions, transverse to the respective depths, of the first set of perforations are described, at least in part, by an arithmetic progression and/or a geometric progression. In this way, quantitative evaluation of the corrosion protection is improved.

In one example, the first set of perforations is mutually spaced apart, for example mutually equispaced. In one example, a spacing between the first perforation and the second perforation is at least a factor S greater than the first dimension, wherein S is a natural number greater than or equal to 2, for example 2, 3, 4, 5, 6, 7, 8, 9, 10 or more. In this way, the first coating between the first perforation and the second perforation includes a sufficiently large reservoir of inhibitor, for example.

The second perforation may be as described generally with respect to the first perforation, notwithstanding that the second dimension and the first dimension are different. In one example, each perforation of the first set of perforations is as described generally with respect to the first perforation, notwithstanding that the respective dimensions, transverse to the respective depths, are different.

In one example, providing the first set of perforations comprises providing M replicates of the first set of perforations, wherein M is a natural number greater than or equal to 2, for example 2, 3, 4, 5, 6, 7, 8, 9, 10 or more. In this way, quantitative evaluation is improved.

In one example, providing the M replicates of the first set of perforations comprises arranging the M replicates of the first set of perforations in an array, for example a regular array having R rows and C columns (i.e. a R x C array), wherein R and C are natural numbers greater than or equal to 1, for example 1, 2, 3, 4, 5, 6, 7, 8, 9, 10 or more. In one example, R = 1. In this way, during exposing, the first set of perforations are oriented in a single row such that any liquid draining from a perforation does not flow down into another perforation, thereby avoiding carryover of inhibitor, for example.

### Exposing specimens to corrosive environments

The method comprises exposing the first specimen to the first corrosive environment. In this way, corrosion protection of the first substrate due, at least in part, to the first coating applied thereupon exposed to the first corrosive environment may be evaluated.

Standard methods including exposing specimens to corrosive environments are known.

In one example, exposing the first specimen to the first corrosive environment comprises fog testing (also known as spray testing). In one example, exposing the first specimen to the first corrosive environment comprises salt fog testing, for example according to ASTM B117 - 19 Standard Practice for Operating Salt Spray (Fog) Apparatus, ASTM G85 - 19 Standard Practice for Modified Salt Spray (Fog) Testing Annex 5 Prohesion Testing, earlier versions thereof and/or equivalents thereof, for example, ISO 9227:2017 Corrosion tests in artificial atmospheres - Salt spray tests and JIS Z 2371 (2015) Methods of salt spray testing.

In one example, exposing the first specimen to the first corrosive environment comprises exposing the first specimen according to ASTM B117 - 19 Standard Practice for Operating Salt Spray (Fog) Apparatus, ASTM G44 - 99 (2013) Standard Practice for Exposure of Metals and Alloys by Alternate Immersion in Neutral 3.5 % Sodium Chloride Solution, ASTM G85 - 19 Standard Practice for Modified Salt Spray (Fog) Testing Annex 5 Prohesion Testing, ASTM G87-02(2018) Standard Practice for Conducting Moist SO2 Tests, earlier versions thereof and/or equivalents thereof.

In one example, exposing the first specimen to the first corrosive environment comprises immersion testing, for example, according to ASTM G44 - 99 (2013) Standard Practice for Exposure of Metals and Alloys by Alternate Immersion in Neutral 3.5 % Sodium Chloride Solution, earlier versions thereof and/or equivalents thereof.

More generally, in one example, the method comprises exposing the first specimen to a first environment, for example according to ASTM B117 - 19 Standard Practice for Operating Salt Spray (Fog) Apparatus, ASTM D822 / D822M - 13 (2018) Standard Practice for Filtered Open-Flame Carbon-Arc Exposures of Paint and Related Coatings, ASTM D870 - 15 Standard Practice for Testing Water Resistance of Coatings Using Water Immersion, ASTM D1014 - 18 Standard Practice for Conducting Exterior Exposure Tests of Paints and Coatings on Metal Substrates, ASTM D1735 - 14 Standard Practice for Testing Water Resistance of Coatings Using Water Fog Apparatus, ASTM D2247 - 15 Standard Practice for Testing Water Resistance of Coatings in 100 % Relative Humidity, ASTM D2803-09 (2015) Standard Guide for Testing Filiform Corrosion Resistance of Organic Coatings on Metal, ASTM D4141/D4141M - 14 Standard Practice for Conducting Black Box and Solar Concentrating Exposures of Coatings, ASTM D4585/D4585M - 18 Standard Practice for Testing Water Resistance of Coatings Using Controlled Condensation, ASTM D4587 - 11 (2019) e1 Standard Practice for Fluorescent UV-Condensation Exposures of Paint and Related Coatings, ASTM D5894 - 16 Standard Practice for Cyclic Salt Fog/UV Exposure of Painted Metal, (Alternating Exposures in a Fog/Dry Cabinet and a UV/Condensation Cabinet), ASTM D6695-16 Standard Practice for Xenon-Arc Exposures of Paint and Related Coatings, ASTM G44 - 99 (2013) Standard Practice for Exposure of Metals and Alloys by Alternate Immersion in Neutral 3.5 % Sodium Chloride Solution, ASTM G85-19 Standard Practice for Modified Salt Spray (Fog) Testing Annex 5 Prohesion Testing, ASTM G87-02(2018) Standard Practice for Conducting Moist SO2 Tests, earlier versions thereof and/or equivalents thereof.

In one example, exposing the first specimen to the first corrosive environment comprises exposing the first specimen to the first corrosive environment for a first duration of a set of durations. In this way, a duration of the exposure may be controlled. In one example, the first duration is in a range from 5 hours to 10,000 hours, preferably in a range from 50 hours to 5,000 hours, more preferably in a range from 100 hours to 2,500 hours, most preferably in a range from 250 hours to 1,000 hours, for example 500 hours, 650 hours or 768 hours.

In one example, the method comprises preparing a second specimen and exposing the second specimen to the first corrosive environment for a second duration of the set of durations. The second specimen may be generally as described with respect to the first specimen. The second duration may be generally as described with respect to the first duration. However, it should be understood that the first duration and the second duration are different. In this way, a rate of corrosion with respect to time may be evaluated.

In one example, the set of durations includes equispaced durations i.e. specimens are exposed for regularly increasing times. In one preferred example, the set of durations includes exponentially increasing durations i.e. specimens are exposed exponentially increasing times. In this way, more data points are obtained for shorter durations, thereby improving quantitative evaluation. In one example, the set of durations is defined by: ${t}_{n} = k {2}^{n}$ where
*tₙ* is the n th duration of the set of durations (hours); and
k is a constant, for example 2, 3, 4, 5, 6, 8, 12, 18, 24, 36 or 48 (hours).

### Determining corrosion

The method comprises determining corrosion in the first set of perforations, for example after known cleaning or rinsing of the first specimen. It should be understood that corrosion in the first set of perforations is determined, rather than corrosion under the first coating adjacent thereto. That is, removal of the first coating to determine corrosion is not required. However, corrosion under the first coating adjacent to the first set of perforations may optionally be conventionally determined. In one example, determining corrosion does not include removing the first coating. Determining or assessing corrosion is known.

In one example, determining corrosion in the first set of perforations comprises determining pitting corrosion in the first set of perforations. That is, corrosion pits may be formed in the first substrate, for example due to the corrosive environment, where corrosion protection due, at least in part, to the first coating is insufficient. For example, inhibitors included in the first layer may migrate towards a site of pitting corrosion and attenuate or inhibit corrosion thereof. However, if the concentration of the inhibitor at the site is below the critical concentration, protection is not provided and may even aggravate pitting by forming local anodes. The concentration of the inhibitor at the site may be below the critical concentration due to insufficient inhibitor initially included in the first coating, depletion of the inhibitor included in the first coating due to migration therefrom into the first set of perforations and/or the site being too remote from the first layer i.e. the migration distance is too far. Hence, pitting corrosion may first occur at locations in the first set of perforations furthest from the first coating, for example along a centreline of a channel or at a centre of a bore. Hence, by providing perforations having different respective dimensions transverse to their respective depths, pitting corrosion protection due, at least in part, to the first coating may be evaluated.

In one example, determining corrosion in the first set of perforations comprises observing or assessing corrosion pits formed in the first substrate of the first perforation. Corrosion pits may be observed using optical microscopy, for example.

Sizes, size distributions and/or number densities of corrosion pits may be measured using optical microscopy in combination with image analysis software, for example Olympus Stream Image Analysis Software 2.4.2.

In one example, determining corrosion in the first set of perforations comprises measuring a first size, for example a diameter, of a first corrosion pit formed in the first substrate of the first perforation. In one example, the measured first size is compared with a predetermined size, for example a threshold size *σₘᵢₙ* of a corrosion pit. In this way, corrosion may be quantitatively evaluated by counting the number of corrosion pits having at least the threshold size *σₘᵢₙ.* In one example, the threshold size *σₘᵢₙ* of a corrosion pit is in a range from 5 µm to 100 µm, preferably from 10 µm to 75 µm, more preferably from 20 µm to 50 µm, for example 30 µm.

In one example, determining corrosion in the first set of perforations comprises calculating a number density and/or a size distribution of corrosion pits formed in the first substrate of the first perforation. In this way, corrosion protection may be quantitatively evaluated.

In one example, determining corrosion in the first set of perforations comprises measuring a second size of a second corrosion pit formed in the first substrate of the second perforation and comparing the second size with the first size. In this way, robustness to physical damage of the first coating and hence the corrosion protection due, at least in part, to the first coating may be evaluated.

In one example, determining corrosion in the first set of perforations comprises monitoring a time to formation of a corrosion pit having a threshold size *σₘᵢₙ* in the first set of perforations, for example in each perforation. Corrosion pits having the threshold size are expected to form first in the largest perforation while conversely, corrosion pits having the threshold size are expected to form last in the smallest perforation. Mean times to the formation of these corrosion pits, having the threshold size, may be monitored by testing a plurality of specimens.

In one example, the time to formation of a corrosion pit having the threshold size is weighted by the dimension of the respective perforation and optionally, normalised against the longest time to formation of a corrosion pit having the threshold size *σₘᵢₙ* (for example, for the smallest perforation). In one example, a protection factor *θ* of the first coating is defined by the sum of these normalised, weighted times for the first set of perforations: $θ = {\sum }_{i = 1}^{P} \frac{100 \times {t}_{i} {d}_{i}}{max \left({t}_{i}\right)}$ where:
P is the number of perforations in the first set of perforations;
*tᵢ* is the time to formation of a corrosion pit having the threshold size *σₘᵢₙ* for the i th perforation;
*dᵢ* is the dimension, for example width or diameter, of the *i* th perforation; and
max(*tᵢ*) is the longest time to formation of a corrosion pit having the threshold size *σₘᵢₙ* for the first set of perforations.

If multiple specimens are tested, the mean time *t̅ᵢ* to formation of a corrosion pit having the threshold size *σₘᵢₙ* for the i th perforation is substituted for the time *tᵢ*.

Particularly, by including the longest time max(*tᵢ*) to formation of a corrosion pit having the threshold size *σₘᵢₙ* for the first set of perforations has a divisor, the protection factor *θ* of the first coating it is calculated from the results, without including an arbitrary test time is typically included in conventional test methods, and allows the test to be completed when corrosion pits are observed in all perforations. That is, the test may be completed sooner than waiting for an arbitrary test time. Furthermore, protection factors *θ* of coatings maybe directly compared for different environments, which typically have different exposure durations. For example, the protection factor *θ* of the first coating determined from accelerated exposure according to ASTM B117 - 19 may be directly compared with that protection factor *θ* of the first coating determined from long-term outdoor exposure testing.

Comparison between different tests thus requires standardisation at least of the number *P* of perforations in the first set of perforations and preferably, standardisation of the respective dimensions of the first set of perforations.

### Specimen

The second aspect provides a specimen for evaluating corrosion protection of substrates due, at least in part, to coatings applied thereupon, wherein the specimen does not comprise and is not a resistive corrosion sensor, wherein the specimen comprises:
a first coating, comprising a first set of layers including a first layer, on a first substrate; and
a first set of perforations, including a first perforation and a second perforation, in the first coating, wherein the first perforation is a first channel in the first coating, has a first depth through the first coating and a first dimension transverse to the first depth, wherein the first dimension is a width of the first channel, wherein the second perforation is a second channel in the first coating, has a second depth through the first coating and a second dimension transverse to the second depth, wherein the second dimension is a width of the second channel, and wherein the first dimension and the second dimension are different.

The specimen, the corrosion protection, the first substrates, the coatings, the first coating, the first set of layers, the first layer, the first substrate, the first set of perforations, the first perforation, this second perforation, the first step, the first dimension, the second perforation, the second depth and/or the second dimension maybe as described with respect to the first aspect.

### Definitions

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### BRIEF DESCRIPTION OF THE DRAWINGS

For a better understanding of the invention, and to show how exemplary embodiments of the same may be brought into effect, reference will be made, by way of example only, to the accompanying diagrammatic Figures, in which:
Figure 1 schematically depicts a specimen according to an exemplary embodiment;
Figure 2 schematically depicts a specimen according to an exemplary embodiment;
Figure 3 schematically depicts a specimen according to an exemplary embodiment;
Figure 4 schematically depicts a method according to an exemplary embodiment; and
Figure 5 is a graph of results obtained from the method according to Figure 4 using specimens generally according to Figure 2.

### DETAILED DESCRIPTION OF THE DRAWINGS

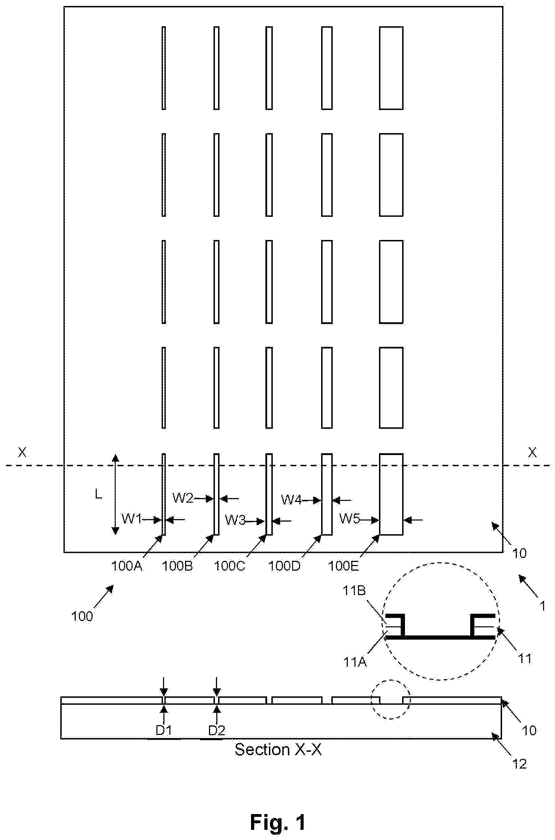

Figure 1 schematically depicts a specimen 1 according to an exemplary embodiment. A plan view of the specimen 1 is shown, together with a section thereof and an enlarge portion (inset). The specimen 1 is for evaluating corrosion protection of substrates due, at least in part, to coatings applied thereupon.

The specimen 1 comprises:
a first coating 10, comprising a first set of layers 11 including a first layer 11A, on a first substrate 12; and
a first set of perforations 100, including a first perforation 100A and a second perforation 100B, in the first coating 10, wherein the first perforation 100A has a first depth D1 through the first coating 10 and a first dimension W1 transverse to the first depth, wherein the second perforation 100B has a second depth D2 through the first coating 10 and a second dimension W2 transverse to the second depth D2 and wherein the first dimension W1 and the second dimension W2 are different.

In this example, the first substrate 12 is an aluminium alloy 2024-T3 sheet, having dimensions 10 cm length by 8 cm width by 2 mm thickness.

In this example, the first layer 11A is an epoxy primer including a strontium chromate inhibitor applied directly on the first substrate 12, without any interlayers therebetween, applied according to the manufacturer's specifications.

In this example, the first set of layers 11 includes a second layer 11B, wherein the second layer 11B is a polyurethane top coat and overlays the first layer 11A, applied according to the manufacturer's specifications.

In this example, the first set of perforations 100 were provided by masking the first substrate 12 using a first mask before applying the first coating 10 on the first substrate 12 and removing the first mask thereafter.

In this example, the first perforation 100A extends fully through the first set of layers 11 of the first coating 10, thereby revealing the first substrate 12, whereby the first depth D1 corresponds with a thickness of the first coating 10. In this example, the second depth D2 is equal to the first depth D1.

In this example, the first set of perforations includes 5 perforations 100A, 100B, 100C, 100D, 100E.

In this example, the first perforation 100A is provided as a first channel in the first coating 10, wherein the first dimension W1 is a width of the first channel. In this example, the first channel has a constant first dimension W1 along a length thereof. In this example, the first channel is linear channel. In this example, the first channel has a planar base. In this example, a cross-sectional shape of the first channel is a rectangle. In this example, the first channel has a cuboidal shape. In this example, a length L of the first channel is 15 mm, significantly greater than the width of the first channel, by at least a factor 3. In this example, the lengths of each channel are the same.

In this example, the first dimension W1 of the first perforation 100A is 0.6 mm. Corresponding dimensions W2 to W5 of the second to fifth perforations 100B to 100 E are 0.8 mm, 1.0 mm, 2.0 mm and 4.0 mm, respectively.

In this example, the first set of perforations 100 is mutually spaced apart, for example mutually substantially equispaced. In this example, a spacing between the first perforation 100A and the second perforation 100B is at least a factor 2 greater than the first dimension W1.

In this example, each perforation 100A, 100B, 100C, 100D, 100E of the first set of perforations 100 is as described generally with respect to the first perforation 100A, notwithstanding that the respective dimensions W1 to W5, transverse to the respective depths D1 to D5, are different.

In this example, the first set of perforations 100 is replicated, including 5 replicates of each perforation 100A, 100B, 100C, 100D, 100E, arranged in a regular 5 x 5 array.

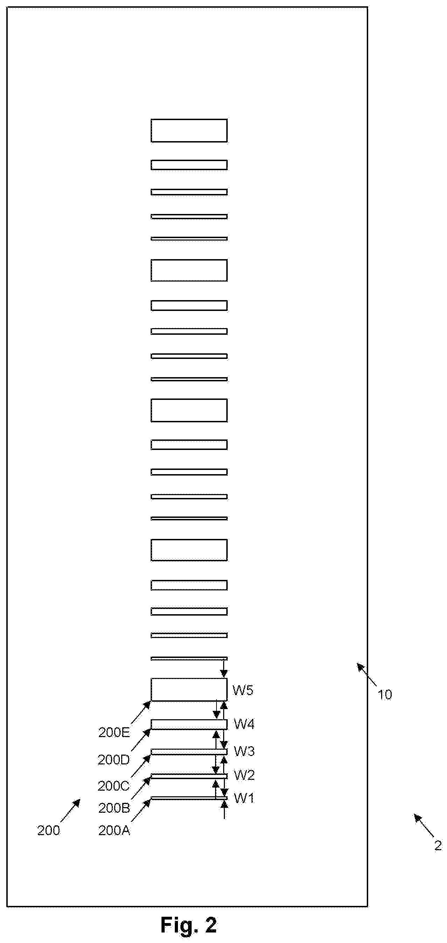

Figure 2 schematically depicts a specimen 2 according to an exemplary embodiment. A plan view of the specimen 2 is shown.

The specimen 2 is generally as described with respect to the specimen 1.

In contrast to the specimen 1, in this example, the first set of perforations 200 is replicated, including 5 replicates of each perforation 200A, 200B, 200C, 200D, 200E, arranged in a regular 1 x 25 array.

During exposing, the first set of perforations 200 are oriented such that the channels are vertical. In this way, any liquid draining from the channels does not flow into another channel, thereby avoiding carryover of inhibitor, for example.

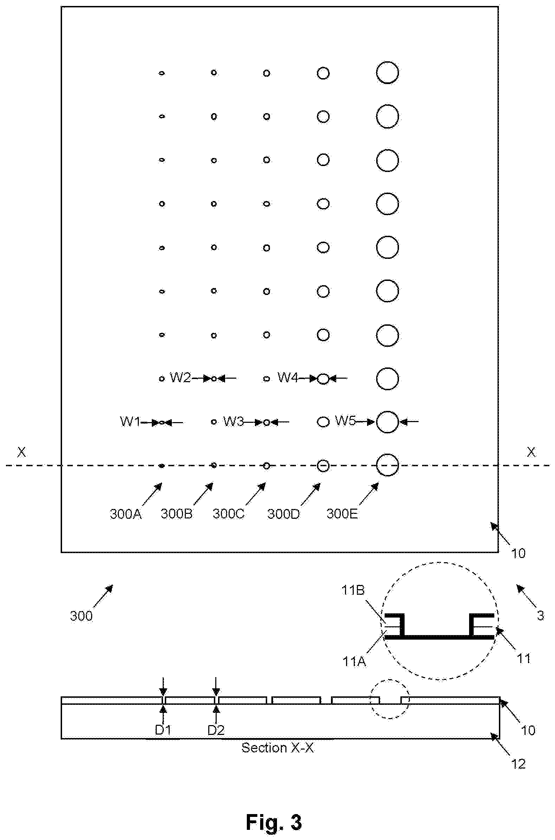

Figure 3 schematically depicts a specimen 3 according to an exemplary embodiment. A plan view of the specimen 3 is shown, together with a section thereof and an enlarge portion (inset).

The specimen 3 is generally as described with respect to the specimen 1.

In contrast to the specimen 1, in this example, the first perforation 300A is provided as a first bore in the first coating 10, wherein the first dimension W1 is a diameter of the first bore. In this example, the first bore has a planar base. In this example, a cross-sectional shape of the first bore is a rectangle. In this example, the first bore has a cylindrical shape.

In this example, the first set of perforations 300 is replicated, including 10 replicates of each perforation 300A, 300B, 300C, 300D, 300E, arranged in a regular 10 x 5 array.

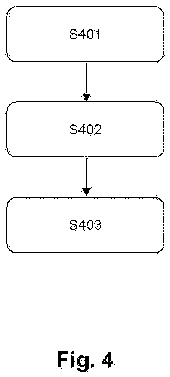

Figure 4 schematically depicts a method according to an exemplary embodiment.

The method is of evaluating corrosion protection of substrates due, at least in part, to coatings applied thereupon.

At S401, the method comprises preparing a first specimen comprising:
applying a first coating, comprising a first set of layers including a first layer, on a first substrate; and
providing a first set of perforations, including a first perforation and a second perforation, in the first coating, wherein the first perforation has a first depth through the first coating and a first dimension transverse to the first depth, wherein the second perforation has a second depth through the first coating and a second dimension transverse to the second depth and wherein the first dimension and the second dimension are different;

At S402, the method comprises exposing the first specimen to a first corrosive environment.

At S403, the method comprises determining corrosion in the first set of perforations.

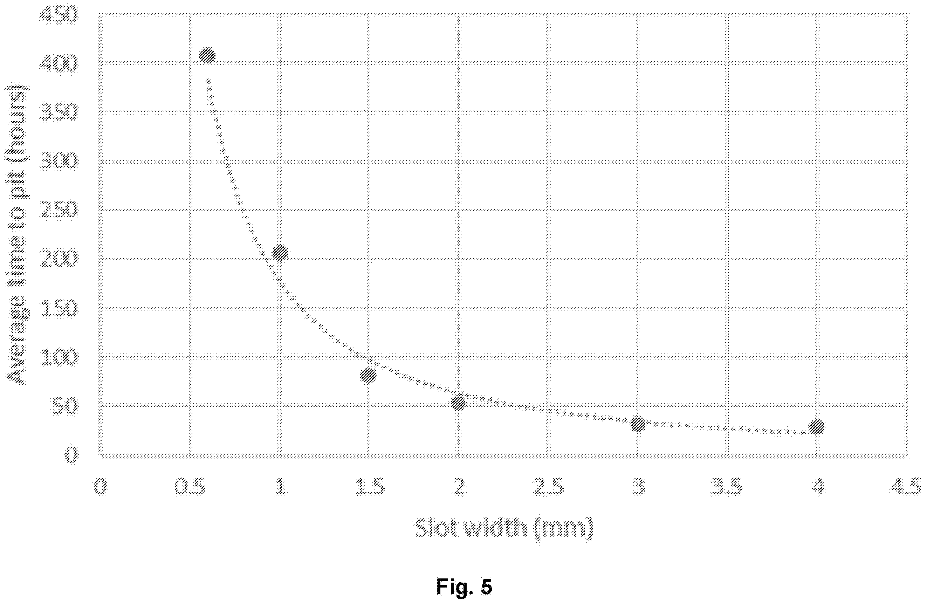

Figure 5 is a graph of results obtained from the method according to Figure 4 using a specimen according to Figure 2.

In this example, the specimens are generally as described with respect to Figure 2. In contrast to Figure 2, the set of perforations has widths of 0.6 mm, 1.0 mm, 1.5 mm, 2.0 mm, 3.0 mm and 4.0 mm (i.e. 6 different widths). In this example, 14 specimens were exposed to a corrosive environment according to ASTM B117-19 for a duration of up to 768 hours. Two specimens were inspected at each of seven intervals during this duration, such that 10 perforations of each size were inspected.

In this example, the set of durations is defined by: ${t}_{n} = k {2}^{n}$ where
*tₙ* is the n th duration of the set of durations (hours); and
k is 6 hours.

Hence, specimens were inspected after 12 hours, 24 hours, 48 hours, 96 hours, 192 hours, 384 hours and 768 hours.

In this example, determining corrosion in the first set of perforations 200 comprises monitoring a time to formation of a corrosion pit having a threshold size *σₘᵢₙ* in the first set of perforations 200, wherein the threshold size *σₘᵢₙ* of the corrosion pit is 30 µm.

Particularly, Figure 5 shows a graph of average (mean) time to pit in hours plotted as a function of slot width (i.e. respective dimension) in mm.

In this example, the protection factor *θ* of the first coating 10 is given by: $θ = {\sum }_{i = 1}^{P} \frac{100 \times {\overline{t}}_{i} {d}_{i}}{max \left({t}_{i}\right)} = 218$ where:
P is the number of perforations in the first set of perforations and is equal to 6;
*t̅ᵢ* is the mean time to formation of a corrosion pit having the threshold size *σₘᵢₙ* of 30 µm for the i th perforation for the 10 replicates;
*dᵢ* is the dimension, for example width or diameter, of the *i* th perforation; and max(*tᵢ*) is the longest time to formation of a corrosion pit having the threshold size *σₘᵢₙ* of 30 µm for the first set of perforations 200.

Although a preferred embodiment has been shown and described, it will be appreciated by those skilled in the art that various changes and modifications might be made without departing from the scope of the invention, as defined in the appended claims and as described above.

## Claims

1. A method of evaluating corrosion protection of substrates due, at least in part, to coatings applied thereupon, wherein the method does not comprise and is not a resistive method of determining corrosion protection, wherein the method comprises:
preparing a first specimen (S401) comprising:
applying a first coating (10), comprising a first set of layers (11) including a first layer (11A), on a first substrate (12); and
providing a first set of perforations (100), including a first perforation (100A) and a second perforation (100B), in the first coating, wherein the first perforation is a first channel in the first coating (10), has a first depth (D1) through the first coating and a first dimension (W1) transverse to the first depth (D1) wherein the first channel has a planar base,
wherein the second perforation (100B) is a second channel in the first coating (10), has a second depth (D2) through the first coating and a second dimension (W2) transverse to the second depth (D2), wherein the second channel has a planar base,
wherein the first dimension and the second dimension are different wherein the first dimension is a width of the first channel and wherein the second dimension is a width of the second channel;
exposing the first specimen (S401) to a first corrosive environment (S402); and
determining pitting corrosion of the first substrate in the first set of perforations (S403), wherein determining pitting corrosion of the first substrate in the first set of perforations comprises monitoring a time to formation of a corrosion pit having a threshold size σₘᵢₙ in the first set of perforations.

2. The method according to claim 1, wherein determining pitting corrosion of the first substrate in the first set of perforations comprises observing corrosion pits formed in the first substrate of the first perforation using optical microscopy.

3. The method according to any previous claim, wherein determining pitting corrosion of the first substrate in the first set of perforations does not include removing the first coating.

4. The method according to any previous claim, wherein providing the first set of perforations comprises revealing, at least in part, the first substrate.

5. The method according to any previous claim, wherein the first dimension is in a range from 0.1 mm to 25 mm.

6. The method according to any previous claim, wherein a length of the first channel is at least a factor 5 greater than the width of the first channel.

7. The method according to any previous claim, wherein the respective dimensions, transverse to the respective depths, of the first set of perforations are described, at least in part, by an arithmetic progression and/or a geometric progression.

8. The method according to any previous claim, wherein providing the first set of perforations comprises machining, at least in part, the first perforation in the first coating after applying the first coating on the first substrate.

9. The method according to any previous claim, wherein providing the first set of perforations comprises, at least in part, masking the first substrate using a first mask before applying the first coating on the first substrate and removing the first mask thereafter.

10. The method according to any previous claim, wherein exposing the first specimen to the first corrosive environment comprises orienting the first set of perforations vertically.

11. The method according to any previous claim, wherein exposing the first specimen to the first corrosive environment comprises exposing the first specimen to the first corrosive environment for a first duration of a set of durations.

12. The method according to claim 11, comprising preparing a second specimen and exposing the second specimen to the first corrosive environment for a second duration of the set of durations, and
wherein the set of durations includes exponentially increasing durations.

13. The method according to any previous claim, wherein determining pitting corrosion of the first substrate in the first set of perforations comprises measuring a first size of a first corrosion pit formed in the first substrate of the first perforation, measuring a second size of a second corrosion pit formed in the first substrate of the second perforation and comparing the second size with the first size.

14. The method according to any previous claim, wherein determining pitting corrosion of the first substrate in the first set of perforations comprises calculating a number density and/or a size distribution of corrosion pits formed in the first substrate of the first perforation.

15. A specimen (1) for evaluating corrosion protection of substrates due, at least in part, to coatings applied thereupon, wherein the specimen does not comprise and is not a resistive corrosion sensor, wherein the specimen comprises:
a first coating (10), comprising a first set of layers (11) including a first layer (11A), on a first substrate (12); and
a first set of perforations (100), including a first perforation (100A) and a second perforation (100B), in the first coating (10),
wherein the first perforation (100A) is a first channel in the first coating (10), has a first depth (D1) through the first coating (10) and a first dimension (W1) transverse to the first depth (D1), wherein the first channel has a planar base, wherein the first dimension (W1) is a width of the first channel, wherein the second perforation (100B) is a second channel in the first coating (10), has a second depth (D2) through the first coating (10) and a second dimension (W2) transverse to the second depth (D2), wherein the second channel has a planar base, wherein the second dimension (W2) is a width of the second channel, and wherein the first dimension (W1) and the second dimension (W2) are different.

## Patentansprüche

1. Verfahren zum Bewerten von Korrosionsschutz von Substraten, der mindestens teilweise auf darauf aufgebrachte Beschichtungen zurückzuführen ist, wobei das Verfahren ein resistives Verfahren zum Bestimmen des Korrosionsschutzes nicht umfasst und nicht ist, wobei das Verfahren umfasst:
Vorbereiten einer ersten Probe (S401), umfassend:
Aufbringen einer ersten Beschichtung (10), umfassend einen ersten Satz von Schichten (11), einschließlich einer ersten Schicht (11A), auf ein erstes Substrat (12); und
Bereitstellen eines ersten Satzes von Perforationen (100), einschließlich einer ersten Perforation (100A) und einer zweiten Perforation (100B), in der ersten Beschichtung, wobei die erste Perforation ein erster Kanal in der ersten Beschichtung (10) ist, eine erste Tiefe (D1) durch die erste Beschichtung und eine erste Abmessung (W1) quer zu der ersten Tiefe (D1) aufweist, wobei der erste Kanal eine planare Basis aufweist, wobei die zweite Perforation (100B) ein zweiter Kanal in der ersten Beschichtung (10) ist, eine zweite Tiefe (D2) durch die erste Beschichtung und eine zweite Abmessung (W2) quer zu der zweiten Tiefe (D2) aufweist, wobei der zweite Kanal eine planare Basis aufweist, wobei die erste Abmessung und die zweite Abmessung unterschiedlich sind, wobei die erste Abmessung eine Breite des ersten Kanals ist und wobei die zweite Abmessung eine Breite des zweiten Kanals ist;
Aussetzen der ersten Probe (S401) gegenüber einer ersten korrosiven Umgebung (S402); und
Bestimmen von Lochfraßkorrosion des ersten Substrats in dem ersten Satz von Perforationen (S403), wobei das Bestimmen von Lochfraßkorrosion des ersten Substrats in dem ersten Satz von Perforationen ein Überwachen einer Zeit bis zu einer Bildung eines Korrosionslochs umfasst, das eine Schwellengröße σₘᵢₙ in dem ersten Satz von Perforationen aufweist.

2. Verfahren nach Anspruch 1, wobei das Bestimmen von Lochfraßkorrosion des ersten Substrats in dem ersten Satz von Perforationen ein Beobachten von Korrosionslöchern, die in dem ersten Substrat der ersten Perforation ausgebildet sind, unter Verwendung von Lichtmikroskopie umfasst.

3. Verfahren nach einem der vorstehenden Ansprüche, wobei das Bestimmen von Lochfraßkorrosion des ersten Substrats in dem ersten Satz von Perforationen nicht ein Entfernen der ersten Beschichtung einschließt.

4. Verfahren nach einem vorstehenden Anspruch, wobei das Bereitstellen des ersten Satzes von Perforationen ein mindestens teilweises Freilegen des ersten Substrats umfasst.

5. Verfahren nach einem der vorstehenden Ansprüche, wobei die erste Abmessung in einem Bereich von 0,1 mm bis 25 mm liegt.

6. Verfahren nach einem der vorstehenden Ansprüche, wobei eine Länge des ersten Kanals mindestens um einen Faktor 5 größer als die Breite des ersten Kanals ist.

7. Verfahren nach einem der vorstehenden Ansprüche, wobei die jeweiligen Abmessungen, quer zu den jeweiligen Tiefen, des ersten Satzes von Perforationen mindestens teilweise durch eine arithmetische Folge und/oder eine geometrische Folge beschrieben werden.

8. Verfahren nach einem der vorstehenden Ansprüche, wobei das Bereitstellen des ersten Satzes von Perforationen ein mindestens teilweises maschinelles Ausarbeiten der ersten Perforation in der ersten Beschichtung nach dem Aufbringen der ersten Beschichtung auf das erste Substrat umfasst.

9. Verfahren nach einem der vorstehenden Ansprüche, wobei das Bereitstellen des ersten Satzes von Perforationen mindestens teilweise ein Maskieren des ersten Substrats unter Verwendung einer ersten Maske vor dem Aufbringen der ersten Beschichtung auf das erste Substrat und das anschließende Entfernen der ersten Maske umfasst.

10. Verfahren nach einem der vorstehenden Ansprüche, wobei das Aussetzen der ersten Probe gegenüber der ersten korrosiven Umgebung ein vertikales Ausrichten des ersten Satzes von Perforationen umfasst.

11. Verfahren nach einem der vorstehenden Ansprüche, wobei das Aussetzen der ersten Probe gegenüber der ersten korrosiven Umgebung das Aussetzen der ersten Probe gegenüber der ersten korrosiven Umgebung für eine erste Dauer aus einem Satz von Dauern umfasst.

12. Verfahren nach Anspruch 11, umfassend das Vorbereiten einer zweiten Probe und das Aussetzen der zweiten Probe gegenüber der ersten korrosiven Umgebung für eine zweite Dauer des Satzes von Dauern; und
wobei der Satz von Dauern exponentiell zunehmende Dauern einschließt.

13. Verfahren nach einem der vorstehenden Ansprüche, wobei das Bestimmen von Lochfraßkorrosion des ersten Substrats in dem ersten Satz von Perforationen ein Messen einer ersten Größe eines ersten Korrosionslochs, das in dem ersten Substrat der ersten Perforation ausgebildet ist, ein Messen einer zweiten Größe eines zweiten Korrosionslochs, das in dem ersten Substrat der zweiten Perforation ausgebildet ist, und ein Vergleichen der zweiten Größe mit der ersten Größe umfasst.

14. Verfahren nach einem der vorstehenden Ansprüche, wobei das Bestimmen von Lochfraßkorrosion des ersten Substrats in dem ersten Satz von Perforationen ein Berechnen einer Anzahldichte und/oder einer Größenverteilung von Korrosionslöchern umfasst, die in dem ersten Substrat der ersten Perforation ausgebildet sind.

15. Probe (1) zum Bewerten von Korrosionsschutz von Substraten, der mindestens teilweise auf darauf aufgebrachte Beschichtungen zurückzuführen ist, wobei die Probe einen resistiven Korrosionssensor nicht umfasst und nicht ist, wobei die Probe umfasst:
eine erste Beschichtung (10), umfassend einen ersten Satz von Schichten (11), einschließlich einer ersten Schicht (11A), auf einem ersten Substrat (12); und
einen ersten Satz von Perforationen (100), einschließlich einer ersten Perforation (100A) und einer zweiten Perforation (100B), in der ersten Beschichtung (10),
wobei die erste Perforation (100A) ein erster Kanal in der ersten Beschichtung (10) ist, eine erste Tiefe (D1) durch die erste Beschichtung (10) und eine erste Abmessung (W1) quer zu der ersten Tiefe (D1) aufweist, wobei der erste Kanal eine planare Basis aufweist, wobei die erste Abmessung (W1) eine Breite des ersten Kanals ist, wobei die zweite Perforation (100B) ein zweiter Kanal in der ersten Beschichtung (10) ist, eine zweite Tiefe (D2) durch die erste Beschichtung (10) und eine zweite Abmessung (W2) quer zu der zweiten Tiefe (D2) aufweist, wobei der zweite Kanal eine planare Basis aufweist, wobei die zweite Abmessung (W2) eine Breite des zweiten Kanals ist, und wobei die erste Abmessung (W1) und die zweite Abmessung (W2) unterschiedlich sind.

## Revendications

1. Procédé d'évaluation de la protection contre la corrosion de substrats due, au moins en partie, à des revêtements appliqués sur ceux-ci, dans lequel le procédé ne comprend pas et n'est pas un procédé résistif de détermination de la protection contre la corrosion, dans lequel le procédé comprend :
la préparation d'un premier échantillon (S401) comprenant :
l'application d'un premier revêtement (10), comprenant un premier ensemble de couches (11) comportant une première couche (11A), sur un premier substrat (12) ; et
la fourniture d'un premier ensemble de perforations (100), comportant une première perforation (100A) et une seconde perforation (100B), dans le premier revêtement, dans lequel la première perforation est un premier canal dans le premier revêtement (10), a une première profondeur (D1) à travers le premier revêtement et une première dimension (W1) transversale à la première profondeur (D1) dans lequel le premier canal a une base plane, dans lequel la seconde perforation (100B) est un second canal dans le premier revêtement (10), a une seconde profondeur (D2) à travers le premier revêtement et une seconde dimension (W2) transversale à la seconde profondeur (D2), dans lequel le second canal a une base plane, dans lequel la première dimension et la seconde dimension sont différentes, dans lequel la première dimension est une largeur du premier canal et dans lequel la seconde dimension est une largeur du second canal ;
l'exposition du premier échantillon (S401) à un premier environnement corrosif (S402) ; et
la détermination de la corrosion par piqûres du premier substrat dans le premier ensemble de perforations (S403), dans lequel la détermination de la corrosion par piqûres du premier substrat dans le premier ensemble de perforations comprend la surveillance d'un temps de formation d'une piqûre de corrosion ayant une taille seuil σₘin dans le premier ensemble de perforations.

2. Procédé selon la revendication 1, dans lequel la détermination de la corrosion par piqûres du premier substrat dans le premier ensemble de perforations comprend l'observation de piqûres de corrosion formées dans le premier substrat de la première perforation à l'aide de la microscopie optique.

3. Procédé selon l'une quelconque revendication précédente, dans lequel la détermination de la corrosion par piqûres du premier substrat dans le premier ensemble de perforations ne comporte pas le retrait du premier revêtement.

4. Procédé selon l'une quelconque revendication précédente, dans lequel la fourniture du premier ensemble de perforations comprend la mise en évidence, au moins en partie, du premier substrat.

5. Procédé selon l'une quelconque revendication précédente, dans lequel la première dimension est dans une plage de 0,1 mm à 25 mm.

6. Procédé selon l'une quelconque revendication précédente, dans lequel une longueur du premier canal est au moins 5 fois supérieure à la largeur du premier canal.

7. Procédé selon l'une quelconque revendication précédente, dans lequel les dimensions respectives, transversales aux profondeurs respectives, du premier ensemble de perforations sont décrites, au moins en partie, par une progression arithmétique et/ou une progression géométrique.

8. Procédé selon l'une quelconque revendication précédente, dans lequel la fourniture du premier ensemble de perforations comprend l'usinage, au moins en partie, de la première perforation dans le premier revêtement après l'application du premier revêtement sur le premier substrat.

9. Procédé selon l'une quelconque revendication précédente, dans lequel la fourniture du premier ensemble de perforations comprend, au moins en partie, le masquage du premier substrat à l'aide d'un premier masque avant d'appliquer le premier revêtement sur le premier substrat et le retrait du premier masque par la suite.

10. Procédé selon l'une quelconque revendication précédente, dans lequel l'exposition du premier échantillon au premier environnement corrosif comprend l'orientation verticale du premier ensemble de perforations.

11. Procédé selon l'une quelconque revendication précédente, dans lequel l'exposition du premier échantillon au premier environnement corrosif comprend l'exposition du premier échantillon au premier environnement corrosif pendant une première durée d'un ensemble de durées.

12. Procédé selon la revendication 11, comprenant la préparation d'un second échantillon et l'exposition du second échantillon au premier environnement corrosif pendant une seconde durée de l'ensemble de durées ; et
dans lequel l'ensemble de durées comporte des durées à augmentation exponentielle.

13. Procédé selon l'une quelconque revendication précédente, dans lequel la détermination de la corrosion par piqûres du premier substrat dans le premier ensemble de perforations comprend la mesure d'une première taille d'une première piqûre de corrosion formée dans le premier substrat de la première perforation, la mesure d'une seconde taille d'une seconde piqûre de corrosion formée dans le premier substrat de la seconde perforation et la comparaison de la seconde taille avec la première taille.

14. Procédé selon l'une quelconque revendication précédente, dans lequel la détermination de la corrosion par piqûres du premier substrat dans le premier ensemble de perforations comprend le calcul d'une densité en nombre et/ou d'une distribution de taille de piqûres de corrosion formées dans le premier substrat de la première perforation.

15. Échantillon (1) permettant d'évaluer la protection contre la corrosion de substrats due, au moins en partie, à des revêtements appliqués sur ceux-ci, dans lequel l'échantillon ne comprend pas et n'est pas un capteur de corrosion résistif, dans lequel l'échantillon comprend :
un premier revêtement (10), comprenant un premier ensemble de couches (11) comportant une première couche (11A), sur un premier substrat (12) ; et
un premier ensemble de perforations (100), comportant une première perforation (100A) et une seconde perforation (100B), dans le premier revêtement (10),
dans lequel la première perforation (100A) est un premier canal dans le premier revêtement (10), a une première profondeur (D1) à travers le premier revêtement (10) et une première dimension (W1) transversale à la première profondeur (D1), dans lequel le premier canal a une base plane, dans lequel la première dimension (W1) est une largeur du premier canal, dans lequel la seconde perforation (100B) est un second canal dans le premier revêtement (10), a une seconde profondeur (D2) à travers le premier revêtement (10) et une seconde dimension (W2) transversale à la seconde profondeur (D2), dans lequel le second canal a une base plane, dans lequel la seconde dimension (W2) est une largeur du second canal, et dans lequel la première dimension (W1) et la seconde dimension (W2) sont différentes.
